# DEMANDE DE BREVET EUROPEEN

(11) **EP 2 535 566 A1**
(43) Date de publication de la demande: **19.12.2012**
(21) Numéro de dépôt: 12172267.2
(22) Date de dépôt: 15.06.2012
(51) Int. Cl.: F03D 3/06

(54) **Dispositif de pales pour éolienne verticale**

(30) Priorité: 16.06.2011 FR 1101841
(71) Demandeur: Lamy, Jacky, 35410 Chateaugiron (FR)
(72) Inventeur: Lamy, Jacky, 35410 Chateaugiron (FR)
(74) Mandataire: Le Noane, Karine

(57) **Abrégé**

L'invention concerne un dispositif de pales pour éolienne verticale comprenant au moins deux pales reliées à un axe de rotation, chaque pale étant constituée d'au moins deux éléments (A, B, ...) réceptifs au vent et présentant une forme de demi-tube.

Selon l'invention, qu'au moins un desdits éléments réceptifs au vent, noté deuxième élément (B), est placé de manière oblique, avec un angle variant de 0° à ±90° par rapport au vecteur force du vent.

## Description

### Energie éolienne

Une éolienne est une machine utilisant la force motrice du vent.

La présente invention concerne un dispositif de pales pour éolienne verticale de type Savonius.

### Eoliennes verticales / Eoliennes horizontales

Une éolienne est dite verticale quand son rotor est perpendiculaire au vent.

Certains navires sont équipés d'éoliennes pour faire fonctionner des équipements tels que le conditionnement d'air. Typiquement, il s'agit alors de modèles à axe vertical prévus pour fournir de l'énergie quelle que soit la direction du vent. Une éolienne de ce type délivrant 3 kW tient dans un cube de 2,5 m de côté.

Une éolienne est dite horizontale quand son rotor est dans l'axe du vent. Eoliennes horizontales : hauteur 150 à 210 mètres diamètre de rotor 70 mètres pour 2Mw

### Points positifs

Chaque éolienne est garante d'un peu moins de gaz carbonique dans l'atmosphère ou d'un peu moins de déchets nucléaires à gérer par les générations à venir. L'énergie éolienne est une énergie renouvelable, idéale car :
● il s'agit d'une forme d'énergie indéfiniment durable et propre ;
● elle ne nécessite aucun carburant ;
● elle ne crée pas de gaz à effet de serre (la production des éoliennes, même intermittente, permet la baisse de production correspondante des centrales thermiques) ;
● chaque mégawatt-heure éolien aide à réduire de 0,8 à 0,9 tonne les émissions de CO₂ rejetées annuellement par la production d'électricité d'origine thermique ;
● lorsque de grands parcs d'éoliennes sont installés sur des terres agricoles, seulement 2 % du sol environ est requis pour les éoliennes ; la surface restante est disponible pour l'exploitation agricole, l'élevage et d'autres utilisations ;
● les propriétaires fonciers reçoivent souvent un paiement pour l'utilisation de leur terrain, ce qui augmente leur revenu ainsi que la valeur du terrain (les loyers sont autour de 1 500 à 2 000 € par MW). Les retombées fiscales (impôts fonciers, CET) pour les communes rurales étaient en 2005 d'environ 18 800 euros/an pour un investissement éolien initial de 2,8 millions d'euros ;
● la propriété des aérogénérateurs par des particuliers et la communauté permet de contribuer directement à la conservation de notre environnement ;
● selon EDF, « [...] l'énergie éolienne se révèle une excellente ressource d'appoint d'autres énergies, notamment durant les pics de consommation, en hiver par exemple. » ;
● les éoliennes permettent au travers de la CET de participer au développement local avec une contribution annuelle de l'ordre de 10 000 € par MW (ce chiffre peut varier en fonction des communautés de communes concernées). Certaines communes rurales peuvent ainsi revivre et assurer des travaux pour lesquels elles s'endettaient jusque-là ;
● elle ne produit que très peu de déchets toxiques et aucun déchet radioactif car constituée principalement de béton (socle), métal et de matières plastiques ;
● une éolienne est en grande partie recyclable (acier, béton). Après son temps de fonctionnement (environ 20 ans), elle est entièrement et rapidement démontable. On peut même si besoin retirer la fondation en béton. Elle n'aura laissé aucun produit contaminant autour d'elle et pourra être facilement remplacée.

### Critiques

### Santé

Lorsque les éoliennes sont placées à des distances trop faibles, elles peuvent impacter la santé des riverains, notamment par leurs nuisances sonores. L'Académie nationale de médecine préconise une distance minimale de 1 500 mètres et elle est porté à 2 miles (3,2 km) aux Etats-Unis d'Amérique. Ces distances minimales ne sont pas toujours respectées en France.

### Énergie qui n'est que d'appoint

L'énergie éolienne ne suffit pas en elle-même à définir une politique énergétique et environnementale. Par exemple, le Danemark, champion incontestable de l'énergie éolienne (plus de 500 W par habitant d'installés) ne produit que 20% de son électricité par l'éolien et a dû développer d'autres énergies renouvelables et des mesures d'efficacité énergétiques pour réduire sa production de gaz à effet de serre.

La puissance électrique disponible représente en moyenne entre 20 et 40% de la puissance installée, selon la force du vent. Il en résulte des surcoûts importants : l'immobilisation du capital est un lourd poids économique.

### Mitage ou Nuisance visuelle

L'esthétique d'une éolienne étant une affaire de goût que l'on ne peut objectivement trancher, les riverains craignent généralement une dégradation visuelle des sites concernés ainsi qu'un impact sur l'écosystème dû au bruit des éoliennes et aux interférences électromagnétiques induites par leurs générateurs. Des flashs très puissants sont émis toutes les cinq secondes en haut des mâts d'éoliennes à la demande de l'aviation civile pour des raisons de sécurité. Ces flashs sont généralement blancs le jour et rouges la nuit, d'intensité plus faible, ceci pour réduire la gêne auprès des riverains.

### Avantages et inconvénients des éoliennes horizontales

Nous connaissons tous les parcs éoliens actuels avec leurs éoliennes. Eoliennes de grandes dimensions, pouvant gâcher le paysage et pour lesquelles, la sécurité n'est pas démontrée. Il faut 600 éoliennes horizontales pour remplacer un réacteur nucléaire, soit 1800 éoliennes horizontales pour remplacer une centrale nucléaire moyenne.

### Avantages et inconvénients des éoliennes verticales

Le **type Darrieus** (schéma 1) repose sur l'effet de portance subi par un profil soumis à l'action d'un vent relatif; effet qui s'exerce sur l'aile d'un avion. On distingue plusieurs déclinaisons autour de ce principe, depuis le simple rotor cylindrique - deux profils disposés de part et d'autre de l'axe - jusqu'au rotor parabolique où les profils sont recourbés en et fixés au sommet et à la base de l'axe vertical. Une éolienne de ce type a fonctionné au Québec (au Parc Eole) de 1983 à 1992. De grandes dimensions (110 m de haut), le prototype s'est détérioré lors d'un coup de vent, il était conçu pour fournir 4 MW avec un générateur au sol. Démarrage sur vent élevé, faible couple, fragile, faible traînée.

Le **type Savonius** (schéma 2), constitué schématiquement de deux ou plusieurs godets demi-cylindriques légèrement désaxés présente un grand nombre d'avantages. Outre son faible encombrement, qui permet d'intégrer l'éolienne aux bâtiments sans en dénaturer l'esthétique, il est peu bruyant. Il démarre à de faibles vitesses de vent et présente un couple élevé quoique variant de façon sinusoïdale au cours de la rotation. Une déclinaison de ce type d'éolienne est le Moulinet dont l'anémomètre constitue une bonne illustration. Citons aussi les modèles à écran où on masque le côté « contre-productif » de l'engin. Ce modèle utilise un système d'orientation de l'écran par rapport au vent, supprimant de fait un avantage essentiel des éoliennes à axe vertical. Ajoutons finalement que l'accroissement important de la masse en fonction de la dimension rend l'éolienne de type Savonius peu adaptée à la production de masse dans un parc à éoliennes.

Démarrage sur vent faible, couple élevé, solide mais lourde, forte traînée.

Le **type à voilure tournante** est caractérisé par l'optimisation dynamique du calage des pales en temps réel, celles-ci se comportent de la même manière que la voile d'un voilier qui ferait un cercle dans l'eau avec un vent déterminé.

### Avantages communs des éolienne verticales :

* faibles dimensions
* fonctionnement quelle que soit la direction du vent (sauf modèle à écran)
* autorégulation

### avantages supplémentaires au type Savonius :

* démarrage sur vent faible
* couple élevé
* **Par contre forte traînée**

Le dispositif recherché a été basé sur l'amélioration du type Savonius. Modifier le modèle des pales pour obtenir une traînée plus faible, tout en gardant une grande surface de pale, permettant de garder le couple élevé.

### Nomenclature schématique

| | |
|---|---|
| Schéma1 | Eoliennes Darrieus |
| Schéma2 | Eolienne Savonius |
| Schéma 3a | Eolienne vue de dessus |
| A | 1 er élément réceptif |
| B | 2e élément réceptif |
| X | axe |
| r,s,t, ... | bras |
| V | vecteur force du vent |
| Schéma3b | pale vue de trois-quart |
| Schéma3c | pale prototype rectangle |
| abcd | premier rectangle |
| efgh | deuxième rectangle isométrique |
| a'b'c'd' | deuxième rectangle non isométrique (non représenté) |
| R3 R4 | rectangles |
| W | tube |
| Schéma3d | pale vue de coté |

### Réalisation

La présente invention concerne un dispositif de pales d'une éolienne verticale pour lesquelles chaque pale comporte plusieurs éléments réceptifs au vent. Plusieurs prototypes ont été réalisé ; Les machines sont au moins en deux pales. La machine schématisée (schéma 3a) comporte trois pales pour lesquelles chaque pale (schéma 3b) comporte au moins deux éléments réceptifs (A, B, ...) au vent tenus à l'axe (X) par des bras au nombre minimum de un (R, S, T,...). Les bras peuvent être profilés.

Pour chaque machine, le premier élément réceptif (A) placé le plus extérieur sur chaque pale est parallèle à l'axe de l'éolienne, perpendiculaire au vecteur force du vent (V). Le deuxième élément réceptif (B), placé intérieurement, est en oblique avec un angle variant de 0° à 90° par rapport au vecteur force du vent. A 90°, le deuxième élément réceptif est parallèle au premier élément réceptif (A) ; A 0°, le deuxième élément réceptif est perpendiculaire au premier élément réceptif (A). Des prototypes de pales ont été réalisées avec un troisième élément réceptif symétrique au deuxième élément réceptif (B) par rapport à l'axe force du vent. Des prototypes de pales ont été réalisés avec A et B inversés (A devenant le deuxième élément réceptif reste parallèle à l'axe de l'éolienne).

Des prototypes de pales ont été réalisées avec A et B non parallèles à l'axe de l'éolienne.

Des prototypes de pales ont été réalisées avec un troisième élément réceptif selon un schéma réduit du deuxième élément réceptif (B).

Des prototypes de pales ont été réalisées avec les différents éléments réceptifs accolés.

Des prototypes de pales ont été réalisées avec les différents éléments réceptifs non accolés.

Réalisation géométrique : Nous hypothésons des pales en demi tube quelque soit leur section, mais toutefois de section constantes. Nous inscrivons le premier élément réceptif (A) vu de dessus ou de dessous dans un rectangle abcd pour lequel le segment ab est sur l'un des bras de maintien ; toujours vu de dessus, nous traçons un rectangle efgh isométrique au premier, symétrique au premier par le segment bc, placé intérieurement par rapport au premier et pour lequel le segment ef est sur le bras de maintien, enfin nous déplaçons ce rectangle le long du bras dans l'espace compris entre l'axe et le premier rectangle abcd.

Nous créons un tube fictif (W) créé par le rectangle efgh se déplaçant le long d'une droite parallèle à l'axe et passant par l'un des points du rectangle.

Nous traçons deux autres rectangles (R3 et R4) isométriques au deuxième rectangle efgh ; l'un est symétrique au rectangle efgh en ef , l'autre est symétrique au rectangle efgh en gh (schéma 3c).

Le Deuxième élément réceptif (B) est inscrit dans ces deux rectangle R3 et R4, dans R3 à l'une de ses extrémités et dans R4 à l'autre extrémité.

Enfin nous déplaçons ces deux rectangles le long du tube (W) formé par le rectangle efgh et la parallèle à l'axe de façon à changer l'angle du deuxième élément réceptif avec le vecteur force du vent qui lui est perpendiculaire à cette droite.

Même chose pour placer un troisième élément réceptif dans l'espace entre le deuxième élément réceptif et l'axe de l'éolienne et ainsi de suite pour les 4eme, 5eme éléments réceptifs...

Dans un deuxième temps, nous faisons varier la longueur du deuxième élément réceptif.

Dans un troisième temps, nous gardons cette longueur constante.

Dans un quatrième temps nous faisons varier la longueur du segment gh pour le rectangle efgh de sa valeur de base vers zero.

Dans un cinquième temps, nous faisons aussi obliquer le premier élément réceptif (A), inversement au deuxième élément réceptif (B) sans toutefois recherche de symétrie.

Pour positionner les éléments réceptifs pour lesquels la section n'est pas constante, nous inscrivons une extrémité du premier élément réceptif (A) dans le rectangle abcd, comme décris ci-dessus ; Et nous inscrivons l'autre extrémité dans un deuxième rectangle a'b'c'd' et nous répétons l'opération.

Résultats d'opérations :
Les meilleurs résultats ont été obtenus avec le deuxième élément réceptif (B) accolé au premier élément réceptif (A) et décalé en avance de la valeur d'un rayon du demi tube extérieur à une extrémité (B1), décalé en retard de la valeur d'un rayon du demi tube extérieur à l'autre extrémité (B2) sur le vecteur force du vent.

Pour la construction géométrique de cet exemple par les rectangles (schéma 3c), le rectangle efgh est accolé au rectangle abcd.

Nous avons aussi étudié et réalisé les cas ou les sections des éléments réceptifs sont une fonction de leur distance par rapport à l'axe. Ceci apporte des avantages dès que les dimensions de l'éolienne deviennent importantes et en conséquence que les variations de sections des éléments réceptifs sont réalisables techniquement.

Pour positionner les éléments réceptifs pour lesquels leur section est une fonction de la distance à l'axe, les rectangles abcd, efgh, a'b'c'd', .... ne sont pas isométriques et suivent la même fonction.

Nous avons également étudié et réalisé ces différent types de pales sur différentes dimensions d'éoliennes.

Dans chacune des réalisations, chaque élément réceptif d'une pale a donc une surface utile et une traînée différente. Chaque pale à une traînée moindre qu'une pale d'une éolienne Savonius standard avec une surface utile équivalente.

Ceci nous permet d'obtenir une meilleure pénétration dans l'air et ainsi diminuer la traînée, tout en gardant une grande surface utile avec le vecteur force du vent.

### Mode de réalisation :

Chaque pale est supportée à l'axe via au moins un bras . La réalisation des éléments réceptifs de chaque pale (schéma 3d) a été obtenue avec des demi tubes PVC simples puis cloisonnés intérieurement, puis des demi tubes aluminium et enfin des demi tubes fibre avec différents types de section : circulaire, rectangulaire, polygonale et elliptique. Des essais ont également été faits avec des éléments réceptifs en demi tube de section coniques et patatoïdes aléatoires qui ont tous donnés plus ou moins satisfaction au spécifications recherchées.

### Applications :

Ce nouveau type de pale permet d'obtenir une moindre résistance à l'air à l'arrière de chaque pale (traînée) par rapport à une éolienne de type Savonius (pales en simple demi tube) tout en conservant les avantages de l'autorégulation et du couple élevé. Il permet la réalisation d'éoliennes de toutes tailles, du modèles mini pour véhicules ou bateaux, du modèles domestiques pour de petites surfaces, jusqu'au modèles monumentaux pouvant fournir de l'énergie à grande échelle, ayant un rendement supérieur aux types verticaux actuels et un encombrement minimum par rapport à tout type d'éolienne actuelle.

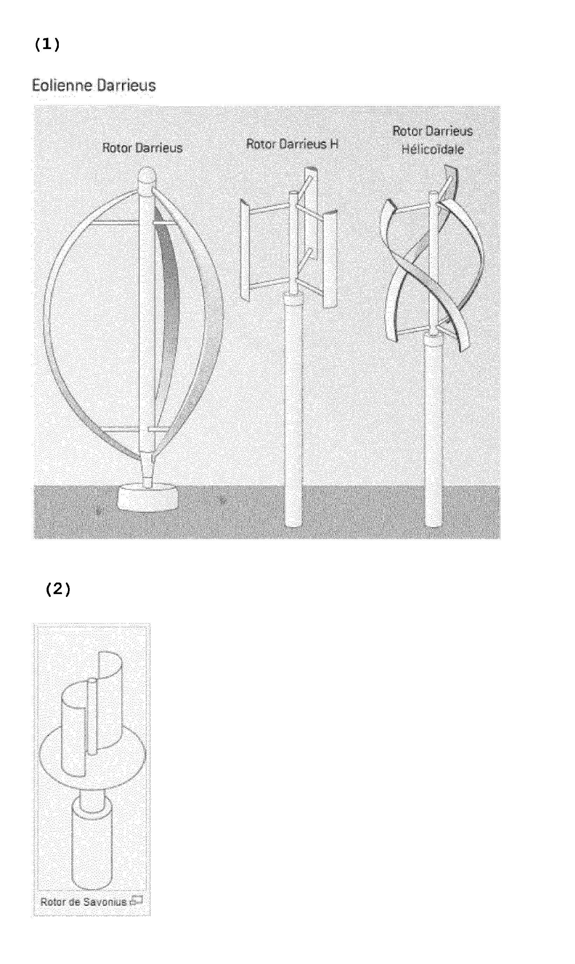

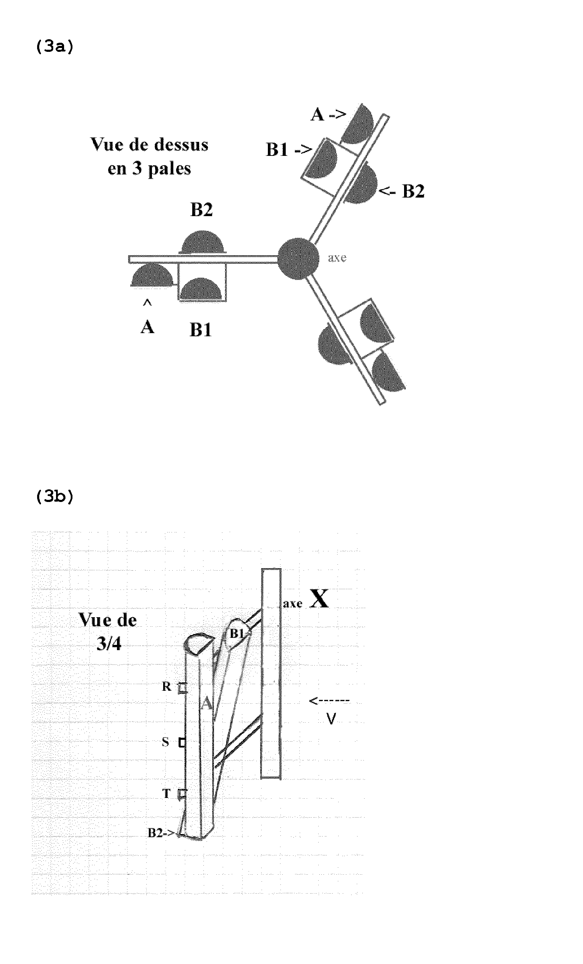

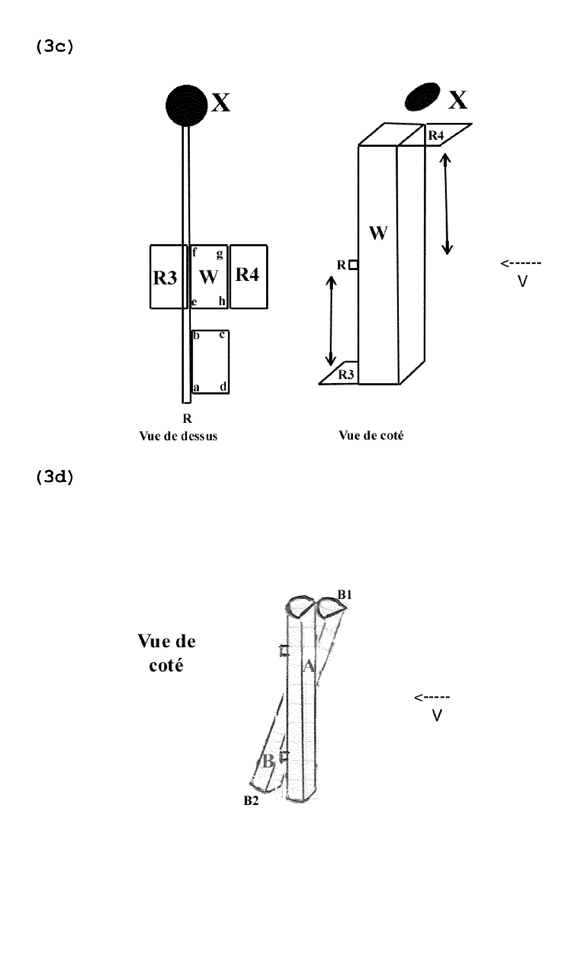

## Revendications

1. Dispositif de pales d'une éolienne verticale comprenant au moins deux pales reliées à un axe de rotation, chaque pale étant constituée d'au moins deux éléments (A, B, ...) réceptifs au vent et présentant une forme de demi-tube,
**caractérisé en ce qu'**au moins un desdits éléments réceptifs au vent, noté deuxième élément (B), est placé de manière oblique, avec un angle variant de 0° à ±90° par rapport au vecteur force du vent.

2. Dispositif de pales d'une éolienne verticale selon la revendication 1, **caractérisé en ce qu'**un desdits éléments réceptifs au vent, noté premier élément (A), est placé parallèle audit axe de rotation.

3. Dispositif de pales d'une éolienne verticale selon la revendication 2, **caractérisé en ce que** ledit premier élément (A) est le plus éloigné dudit axe de rotation et ledit deuxième élément (B) est le plus proche dudit axe de rotation.

4. Dispositif de pales d'une éolienne verticale selon la revendication 3, caractérisé en ce ledit deuxième élément (B) est accolé intérieurement audit premier élément (A).

5. Dispositif de pales d'une éolienne verticale selon la revendication 4, caractérisé en ce l'angle d'inclinaison dudit deuxième élément (B) est choisi de sorte que ledit deuxième élément (B) est placé décalé en avance de la valeur d'un rayon du demi-tube dudit premier élément (A) à l'une de ses extrémités (B1) et décalé en retard de la valeur d'un rayon du demi-tube dudit premier élément (A) à l'autre de ses extrémités (B2).

6. Dispositif de pales d'une éolienne verticale selon la revendication 1, **caractérisé en ce qu'**au moins un deuxième éléments réceptifs au vent est placé de manière oblique, avec un angle variant de 0° à ±90° par rapport au vecteur force du vent.

7. Dispositif de pales d'une éolienne verticale selon la revendication 1, **caractérisé en ce qu'**au moins un desdits éléments réceptifs au vent est cloisonné intérieurement.

8. Dispositif de pales d'une éolienne verticale selon la revendication 1, **caractérisé en ce qu'**au moins deux desdits éléments réceptifs au vent présentent une surface réceptive identique.

9. Dispositif de pales d'une éolienne verticale selon la revendication 1, **caractérisé en ce qu'**au moins un desdits éléments réceptifs au vent présente une surface réceptive fonction de la distance dudit élément réceptif audit axe de rotation.

10. Dispositif de pales d'une éolienne verticale selon la revendication 1, **caractérisé en ce que** lesdits éléments réceptifs au vent présentent une section appartenant au groupe comprenant :
● une section circulaire ;
● une section triangulaire ;
● une section rectangulaire ;
● une section elliptique ;
● une section de dimension constante ;
● une section conique ;
● une section fonction d'une courbe mathématique ;
● une combinaison desdites sections précédentes.
